(19) Europäisches Patentamt
European Patent Office
Office européen des brevets

(11) **EP 1 988 649 A1**

(12) **EUROPEAN PATENT APPLICATION**

(43) Date of publication:
**05.11.2008 Bulletin 2008/45**

(51) Int Cl.:
***H04B 7/26*** *(2006.01)*

(21) Application number: **07115661.6**

(22) Date of filing: **04.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.05.2007 EP 07107547**

(71) Applicants:
• **Nokia Siemens Networks Oy**
**02610 Espoo (FI)**
• **Nokia Corporation**
**02150 Espoo (FI)**

(72) Inventors:
• **Rinne, Mika**
**02320, Espoo (FI)**

• **Hooli, Kari**
**90650, Oulu (FI)**
• **Raaf, Bernhard**
**82061, Neuried (DE)**
• **Michel, Jürgen**
**81737, Munich (DE)**
• **Ojala, Jussi**
**00530 Helsinki (FI)**
• **Malkamaki, Esa**
**02130 Espoo (FI)**

(74) Representative: **TBK-Patent**
**Bavariaring 4-6**
**80336 München (DE)**

(54) **Methods, systems, apparatuses and related computer program product for allocation of communication resources**

(57) It is disclosed a method comprising generating position-related indication information indicating a positional relation between communication resource update information and communication resource information, including the generated position-related indication information into communication resource allocation information, and transmitting the communication resource information, the communication resource allocation information being a portion of the communication resource information. There is further disclosed a method comprising receiving transmitted communication resource information comprising both communication resource allocation information and position-related indication information indicating a positional relation between communication resource update information and communication resource information, retrieving the communication resource allocation information from the communication resource information based on the position-related indication information, transceiving signals based on the communication resource allocation information using an allocated communication resource, and updating the communication resource based on the communication resource update information.

**Fig. 9A**

**(Cont. next page)**

# Fig. 9B

CCE 1 | CCE 2 | CCE 3 | CCE 4 | CCE 5 | CCE 6 | CCE 7 | CCE 8 | CCE 9 | CCE10 | CCE11

**Description**

FIELD OF THE INVENTION

The present invention relates to allocation of communication resources. In particular, the present invention relates to the UTRAN (UMTS Terrestrial Radio Access Network) technology sometimes referred to as LTE (Long Term Evolution).

BACKGROUND

In 3GPP (3rd Generation Partnership Project), there have been discussions related to the timing control and power control in the UL (Uplink). For example, UL power control adjustments are a-periodic and are included in UL scheduling grants for scheduled data. Furthermore, the view that UL power control adjustments are sent relatively infrequently appears to have wide support in 3GPP. For example, TA (time alignment) updates are sent on a per-need basis, yet at a 2 Hz rate at most. E.g. a L1/L2 (OSI (Open System Interconnection) layer 1/2) control channel is considered as a candidate also for signalling of time alignment updates. Hence, both power control adjustments and time alignment updates can be assumed to be signaled a-periodically and at low rate on average.

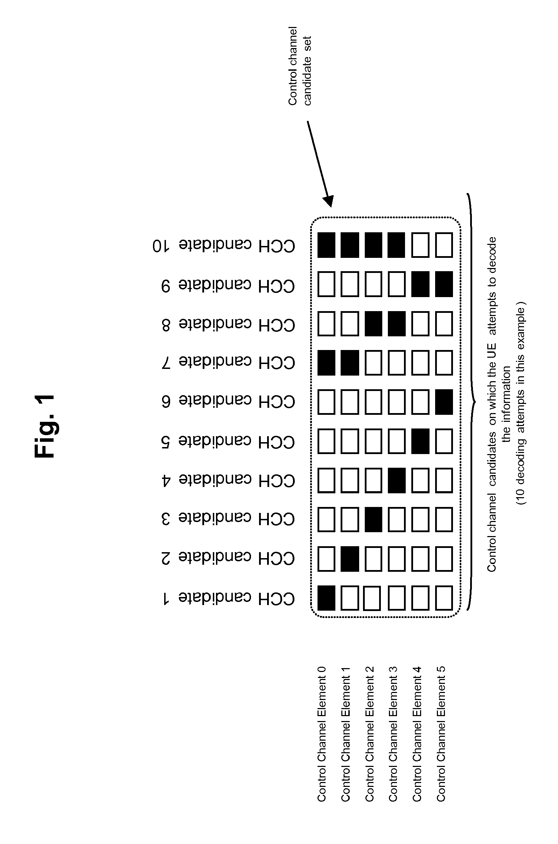

Furthermore, as shown in Fig. 1, the downlink CCHs (control channels) are formed by aggregation of CCEs (control channel elements), and a control channel element is modulated on to a set of resource elements. As shown in Fig. 1, aggregation of the control channel elements is effected in a structured way. A UE (user equipment) monitors a set of candidate control channels, which can be set e.g. by higher layer signalling. The structure defines rules for combining the control channel elements to the Physical Downlink Control Channels (PDCCH). The structure is needed to reduce the number and positions of the potential control channels and hence also the number of blind detections performed by the UE in order to detect the control channels. An example on possible mappings between control channel elements and control channels is also shown in Fig. 1.

Due to the low signalling rate, the use of higher layer signalling for TA and PC (power control) is a possibility which has been considered in 3GPP. It provides an acknowledged signalling method, and the solution does not cause any overhead when no TA or PC updates are transmitted. However, the overhead per each transmitted TA/PC update is large, e.g. around 100 information bits (DL grant + TA + UE ID (user equipment identification) + CRC (Cyclic Redundancy Code)).

In order to overcome one or more or the above disadvantages, which is the object of the present invention, the present invention provides the following aspects.

According to the present invention, in a first aspect, this object is for example achieved by **a method** comprising:

associating communication resource update information with communication resource allocation information, the communication resource allocation information and the associated communication resource update information each being a portion of communication resource information;
signalling the association of the communication resource update information with the communication resource allocation information; and
transmitting the communication resource information.

According to the present invention, in a second aspect, this object is for example achieved by **a method** comprising:

receiving transmitted communication resource information comprising communication resource allocation information, associated communication resource update information, and a signaled association of the communication resource update information with the communication resource allocation information;
retrieving the communication resource allocation information and the associated communication resource update information from the communication resource information based on the signaled association;
transceiving signals based on the communication resource allocation information using an allocated communication resource; and
updating the communication resource based on the communication resource update information.

According to further refinements of the invention as defined under the above first and second aspects,

- the communication resource information is received in at least one control channel element;
- the communication resource allocation information comprises at least one of a user equipment allocation, a user equipment identification and a cyclic redundancy code;

- the communication resource update information comprises at least one parameter of the communication resource to be updated and at least one of the following:

  i) at least one information element indicating whether or not the communication resource is to be updated;
  ii) a respective information field for each one of the at least one parameter;
  iii) a common information field for each one of the at least one parameter and one information element, wherein each parameter allocates a different information length in the common information field and the one information element indicates the information length of the common information field to be read out; and
  iv) a common information field consisting of a number of bits, wherein combinations of the at least one parameter are coded by pattern of the number of bits;

- the communication resource update information comprises at least one of a timing alignment update, a power control update, a frequency update, a phase update, an update of phase differences, an update of directivity of radiation and an update of measurement, radio access or networking information;
- the communication resource information is received in at least one physical downlink control channel;
- the communication resource allocation information is an uplink scheduling grant;
- in the transceiving, the communication resource allocation information is received in at least one communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;
- in the transceiving, at least a signal is transmitted using a communication resource from at least one set of uplink shared data channel resources comprised in the uplink scheduling grant;
- in the transceiving, the communication resource to receive is at least one of the selected set of downlink shared data channel resources comprised in the downlink scheduling grant;
- the associating and the signalling are performed on a first communication layer of a layered communication model, and the transmitting and the receiving are performed on a second communication layer of the layered communication model different from the first communication layer;
- at least a portion of the communication resource update information comprises sequence number information;
- in the associating, an index indicating the association to the communication resource update information is attached, in the signalling, the index and the communication resource update information are signaled, and in the retrieving, the associated communication resource update information is retrieved based on the index;
- at least a portion of the index comprises sequence number information.

According to the present invention, in a third aspect, this object is for example achieved by **a method** comprising:

integrating communication resource update information into communication resource allocation information, the communication resource allocation information and the integrated communication resource update information each being a portion of communication resource information; and
transmitting the communication resource information.

According to the present invention, in a fourth aspect, this object is for example achieved by **a method** comprising:

receiving transmitted communication resource information comprising communication resource allocation information comprising integrated communication resource update information;
transceiving signals based on the communication resource allocation information using an allocated communication resource; and
updating the communication resource based on the integrated communication resource update information.

According to further refinements of the invention as defined under the above fourth aspect,

- the method according to the fourth aspect further comprises detecting the integrated communication resource update information based on an invalid format of the communication resource information.

According to the present invention, in a fifth aspect, this object is for example achieved by **a method** comprising:

generating position-related indication information indicating a positional relation between communication resource update information and communication resource information;

including the generated position-related indication information into communication resource allocation information; and

transmitting the communication resource information, the communication resource allocation information being a portion of the communication resource information.

According to the present invention, in a sixth aspect, this object is for example achieved by **a method** comprising:

receiving transmitted communication resource information comprising both communication resource allocation information and position-related indication information indicating a positional relation between communication resource update information and communication resource information;

retrieving the communication resource allocation information from the communication resource information based on the position-related indication information;

transceiving signals based on the communication resource allocation information using an allocated communication resource; and

updating the communication resource based on the communication resource update information.

According to further refinements of the invention as defined under the above fifth and sixth aspect,

- the communication resource information is received in at least one control channel element and the position-related indication information further comprises user-related information;
- the communication resource allocation information comprises at least one of a user equipment allocation, a user equipment identification and a cyclic redundancy code;
- the communication resource update information comprises at least one of a timing alignment update, a power control update, a frequency update, a phase update, an update of phase differences, an update of directivity of radiation and an update of measurement, radio access or networking information;
- the communication resource information is received in at least one physical downlink control channel;
- the communication resource allocation information is an uplink scheduling grant;
- in the transceiving, the communication resource allocation information is received in at least one communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;
- in the transceiving, at least a signal is transmitted using a communication resource from at least one set of uplink shared data channel resources comprised in the uplink scheduling grant;
- in the transceiving, the communication resource to receive is at least one of the selected set of downlink shared data channel resources comprised in the downlink scheduling grant.

According to the present invention, in a seventh aspect, this object is for example achieved by **an apparatus** comprising:

means for associating communication resource update information with communication resource allocation information, the communication resource allocation information and the associated communication resource update information each being a portion of communication resource information;

means for signalling the association of the communication resource update information with the communication resource allocation information; and

means for transmitting the communication resource information.

According to the present invention, in an eighth aspect, this object is for example achieved by **an apparatus** comprising:

means for receiving transmitted communication resource information comprising communication resource allocation information and associated communication resource update information, and for receiving a signaled association of the communication resource update information with the communication resource allocation information;

means for retrieving the communication resource allocation information and the associated communication resource update information from the communication resource information based on the signaled association;

means for transceiving signals based on the communication resource allocation information using an allocated communication resource; and

means for updating the communication resource based on the communication resource update information.

According to further refinements of the invention as defined under the above seventh and eighth aspects,

- the communication resource information is received in at least one control channel element;
- the communication resource allocation information comprises at least one of a user equipment allocation, a user equipment identification and a cyclic redundancy code;
- the communication resource update information comprises at least one parameter of the communication resource to be updated and at least one of the following:

    i) at least one information element indicating whether or not the communication resource is to be updated;
    ii) a respective information field for each one of the at least one parameter;
    iii) a common information field for each one of the at least one parameter and one information element, wherein each parameter allocates a different information length in the common information field and the one information element indicates the information length of the common information field to be read out; and
    iv) a common information field consisting of a number of bits, wherein combinations of the at least one parameter are coded by pattern of the number of bits;

- the communication resource update information comprises at least one of a timing alignment update, a power control update, a frequency update, a phase update, an update of phase differences, an update of directivity of radiation and an update of measurement, radio access or networking information;
- the communication resource information is received in at least one physical downlink control channel;
- communication resource allocation information is an uplink scheduling grant;
- the means for transceiving is configured to receive the communication resource allocation information using at least one of a communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;'
- the means for transceiving is configured to transmit at least a signal in a communication resource from at least one of a set of uplink shared data channel resources comprised in the uplink scheduling grant;
- the communication resource to receive is at least one of the selected set of downlink shared data channel resources comprised in the downlink scheduling grant;
- the means for associating and the means for signalling are configured to operate on a first communication layer of a layered communication model, and the means for transmitting and the means for receiving are configured to operate on a second communication layer of the layered communication model different from the first communication layer;
- at least a portion of the communication resource update information comprises sequence number information;
- the means for associating is configured to attach an index indicating the association to the communication resource update information, the means for signalling is configured to signal the index and the communication resource update information, and the means for retrieving is configured to retrieve the associated communication resource update information based on the index;
- at least a portion of the index comprises sequence number information.

According to the present invention, in a ninth aspect, this object is for example achieved by **an apparatus** comprising:

means for integrating communication resource update information into communication resource allocation information, the communication resource allocation information and the integrated communication resource update information each being a portion of communication resource information; and
means for transmitting the communication resource information.

According to the present invention, in a tenth aspect, this object is for example achieved by **an apparatus** comprising:

means for receiving transmitted communication resource information comprising communication resource allocation information comprising integrated communication resource update information;
means for transceiving signals based on the communication resource allocation information using an allocated communication resource; and
means for updating the communication resource based on the integrated communication resource update information.

According to further refinements of the invention as defined under the above tenth aspect,

- the apparatus according to the eighth aspect further comprises means for detecting the integrated communication resource update information based on an invalid format of the communication resource information.

According to the present invention, in an eleventh aspect, this object is for example achieved by **an apparatus** comprising:

means for generating position-related indication information indicating a positional relation between communication resource update information and communication resource information;
means for including the generated position-related indication information into communication resource allocation information; and
means for transmitting the communication resource information, the communication resource allocation information being a portion of the communication resource information.

According to the present invention, in a twelfth aspect, this object is for example achieved by **an apparatus** comprising:

means for receiving transmitted communication resource information comprising both communication resource allocation information and position-related indication information indicating a positional relation between communication resource update information and communication resource information;
means for retrieving the communication resource allocation information from the communication resource information based on the position-related indication information;
means for transceiving signals based on the communication resource allocation information using an allocated communication resource; and
means for updating the communication resource based on the communication resource update information.

According to further refinements of the invention as defined under the above eleventh and twelfth aspects,

- the communication resource information is received in at least one control channel element and the position-related indication information further comprises user-related information;
- the communication resource allocation information comprises at least one of a user equipment allocation, a user equipment identification and a cyclic redundancy code;
- the communication resource update information comprises at least one of a timing alignment update, a power control update, a frequency update, a phase update, an update of phase differences, an update of directivity of radiation and an update of measurement, radio access or networking information;
- the communication resource information is received in at least one physical downlink control channel;
- the communication resource allocation information is an uplink scheduling grant;
- the means for transceiving is configured to receive the communication resource allocation information in at least one communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;
- the means for transceiving is configured to transmit at least a signal using a communication resource from at least one set of uplink shared data channel resources comprised in the uplink scheduling grant;
- the means for transceiving is configured to receive the communication resource to receive being at least one of the selected set of downlink shared data channel resources comprised in the downlink scheduling grant;

According to further refinements of the invention as defined under the above seventh to twelfth aspects,

- the apparatus according to the above fifth to eighth aspects is implemented as a chipset or module.

According to the present invention, in a thirteenth aspect, this object is for example achieved by **a system** comprising:

an apparatus according to the above seventh aspect; and
at least one apparatus according to the above eighth aspect.

According to further refinements of the invention as defined under the above thirteenth aspect,

- the association of the communication resource update information with the communication resource allocation information is a one-to-one association;
- the association of the communication resource update information with the communication resource allocation information is unique for the communication resource allocation information.

According to the present invention, in a fourteenth aspect, this object is for example achieved by **a system** comprising:

an apparatus according to the above ninth aspect; and
at least one apparatus according to the above tenth aspect.

According to the present invention, in a fifteenth aspect, this object is for example achieved by **a system** comprising:

an apparatus according to the above eleventh aspect; and
at least one apparatus according to the above twelfth aspect.

According to the present invention, in a sixteenth aspect, this object is for example achieved by **a computer program product** comprising code means for performing methods steps of a method according to the above first to fourth aspects, when run on a computer.
In this connection, it has to be pointed out that the present invention enables one or more of the following:

- A-periodic and low rate control of timing and power can be coped with by providing a small overhead.
- Moreover, the PC control word and the TA control word appearing at variable rate events for a UE in a non-correlated manner for all the served UEs in the cell can be managed.
- Alternatively, the TA/PC updates may be logically associated also to DL scheduling grants (signalling entities). This is advantageous when UE has scheduled DL transmissions, but does not have any scheduled UL transmissions.
- The UL/DL control channel is dimensioned for transmission of so-called bursty control words in an efficient way.
- Since the signalling resource is shared between transmitted UL/DL scheduling grants, the overhead is in most cases smaller than when TA/PC updates are included to every UL/DL scheduling grant.
- Although TA/PC updates exhibit inherent so-called "burstiness" due to a-periodic updates, TA and PC tolerate relatively high and varying delays. Thus, the update bursts can be smoothened over several sub-frames, by delaying a portion of the TA/PC updates to later sub-frames, providing a more constant signalling load. This can be used to dimension the TA/PC update resources more tightly, thus, reducing the constant overhead further and increasing the efficiency e.g. of TA/PC resource usage.
- The overhead per TA/PC update is relatively small since the updates are associated with the UL/DL scheduling grant. Thus, the overhead due to the UE identification (as with special UL scheduling grants) is avoided.
- The signalling does not change the UL/DL scheduling grant format and, thus, does not impact the decoding complexity of UL/DL scheduling grants.
- The distribution of scheduling commands with control channel candidates or control channel elements remains unlimited by the TA/PC update. Thus, the allocation of UEs to control channel candidates or control channel elements can be done liberally. It is possible to code some other information more efficiently when this freedom of the allocation is available. If several competing optimizations all making use of a particular allocation are possible, then the one that gives the highest advantage may be selected. Explicit indexing such as set out herein below is more efficient than an individual TA/PC command, because the later would need to identify the UE. As there are typically more UEs in a cell or routing area than potential grants in a control channel, also more bits are necessary for an explicit UE identification compared to the indexing described herein below.
- TA/PC updates do not need to be coded individually but can be coded e.g. together with other information, including TA/PC updates for several UEs, or so-called Cat0 information indicating general properties of the scheduling structure, or with the UL/DL scheduling grant, or with a combination thereof.

- According to an alternative third embodiment to be described herein below, e.g. the L1/L2 signaling is improved so that e.g. TA and/or PC commands/updates may be encoded together with an UL/DL scheduling grant, but do not have to be included e.g. in each UL/DL scheduling grant but only to some of the scheduling grants (the number of positions with TA and/or PC may depend on the average (or maximum) number of TA and/or PC command needed to be signaled in one TTI (Transmission Time Interval). This number may be set in the specification or can be configured e.g. via signalling). Furthermore, the need of different TA and/or PC channel in the system (such a channel would only code a very small number of bits, that might cause inefficient coding) is avoided. Moreover, since the UL/DL scheduling grants which utilize different coding (due to inclusion of said e.g. TA and/or PC commands/updates) are known by the UE, this alternative third embodiment does not imply more blind decoding even some scheduling grants include the TA or/and PC command.

The present invention is directed to provide a signalling scheme for a bursty control of uplink transmission. More particularly, the present invention is directed to the design of UL/DL signalling needed for the signalling of UL power control commands and/or time alignment updates. In an embodiment of the present invention, a signalling design of the Physical Downlink Control Channel (PDCCH) is shown, which induces relatively small signalling overhead, while yet allowing fast scheduling and allocations in a sub-frame resolution both for the DL and UL payload. Alternatively, the TA/PC updates may be logically associated also to DL scheduling grants (signalling entities) e.g. in case the UE has scheduled DL transmissions, but does not have any scheduled UL transmissions.

More particularly, in the invention, TA and PC updates are transmitted preferably only for a fraction of the UEs having a UL/DL scheduling grant in a given sub-frame/preceding sub-frame. The TA/PC updates may be transmitted separately (e.g. on separate resource elements of PDCCH) from UL scheduling grants but each of TA/PC updates is logically associated to a particular control channel candidate, control channel element, or other such structure used in definition of UL/DL control channel. Hence, a TA/PC update is associated to the UL/DL scheduling grant that uses the corresponding control channel candidate or control channel element. This may associate a TA or PC update to a particular UE ID. As an alternative for implicit association, each of TA/PC updates may include a few bits explicitly indicating an associated control channel candidate.

BRIEF DESCRIPTION OF THE DRAWINGS

Embodiments of the present invention are described herein below with reference to the accompanying drawings, in which:

Fig. 1 shows an example of control channel elements (CCE) and the control channel candidates;

Fig. 2A shows the signalling principle for the TA and/or PC updates with the UL scheduling grants on the DL control channel according to a first embodiment of the present invention; Fig. 2B shows the signalling principle for the TA and/or PC updates with the DL scheduling grants on the UL control channel according to the first embodiment of the present invention;

Fig. 3 shows a method for allocating communication resources according to the first embodiment of the present invention;

Fig. 4 shows one apparatus (e.g. a Base Station) for allocating communication resources according to the first embodiment of the present invention and another apparatus (e.g. a User Equipment) for decoding and interpreting the allocations and control signalling commands of the one apparatus, the another apparatus being configured to apply the allocations and control signalling commands e.g. in the signal transmission.

Fig. 5 shows a first example of association by means of control channel candidates according to the first embodiment of the present invention;

Fig. 6 shows a second example of association by means of control channel elements according to the first embodiment of the present invention;

Fig. 7 shows a method for allocating communication resources according to a second embodiment of the present invention;

Fig. 8 shows one apparatus (e.g. a Base Station) for allocating communication resources according to the second embodiment of the present invention and another apparatus (e.g. a User Equipment) for decoding and interpreting the allocations and control signalling commands of the one apparatus, the another apparatus being configured to apply the allocations and control signalling commands e.g. in the signal transmission;

Fig. 9A shows the alternative third embodiment related to the signalling principle for the TA and/or PC updates with the UL/DL scheduling grants or control channel elements according to the present invention; Fig. 9B shows a modification of the third embodiment; and

Fig. 10 shows one apparatus (e.g. a Base Station) for allocating communication resources according to the alternative third embodiment of the present invention and another apparatus (e.g. a User Equipment) for decoding and interpreting the allocations and control signalling commands of the one apparatus, the another apparatus being configured to apply the allocations and control signalling commands e.g. in the signal transmission.

DETAILED DESCRIPTION OF EMBODIMENTS OF THE PRESENT INVENTION

Embodiments of the present invention are described herein below by way of example with reference to the accompanying drawings.

There are several embodiments concerning e.g. implementation of the solution according to the present invention. Without being restricted thereto, several embodiments are described herein below, referring to "IMPLICIT AND EXPLICIT ASSOCIATION", "ASSOCIATION VIA CONTROL CHANNEL CANDIDATES/ELEMENTS", "ALTERNATIVE ASSOCIATIONS", "TRANSMISSION OF THE COMMUNICATION RESOURCE UPDATE INFORMATION", "UPDATING COMMUNICATION RESOURCES", and "NON-SCHEDULED UEs".

It is to be noted that for this description, the terms "TA/PC update(s)/command(s) (e.g. $2031,...,203n$)" and "UL/DL (scheduling) grants (e.g. $2021,...,202m_{UL/DL}$)" are examples for the communication resource update information and the communication resource allocation information, respectively, without restricting the latter terms to the special technical or implementation details imposed to the terms "TA/PC update(s)/command(s)" and "UL/DL (scheduling) grants".

Concerning especially the terms "TA" and/or "PC", there may be other updates than TA and/or PC, e.g. frequency control, phase control, control of phase differences on different sub-carriers or sub-bands, control of directivity of radiation to be used e.g. for beam forming, control of update of measurement, radio access or networking information (such as information present e.g. in the System Information Blocks of a cellular system. The presence of changes of the System information may be thus signaled associated e.g. to the resource allocation as a specific format of DL scheduling grant), or control of other similar features. Furthermore, the term "TA/PC" refers to at least one of timing alignment and power control, i.e. TA (i.e. Timing Advance Control) and/or PC (Power Control) may be utilized both jointly and independently:

- Power Control independent of whether or not being used for Timing Advance Control;
- Timing Advance Control independent of whether or not being used for Power Control;
- jointly to Power Control and Timing Advance Control, regardless of only either one of them being present at a time or of both of them being present at the same time.

Furthermore, a Power Control (PC) update may be applied to a selected multi-carrier or a single carrier signal waveform so that the previously applied transmission power on a symbol divided by the bandwidth may be updated with a relative increase or decrease of power for the subsequent transmission of symbols divided by the bandwidth. The bandwidth may change between the earlier transmission and the later transmission, which scale the actual transmission power independently of the applied power control divided by the bandwidth. Instead of the relative update mentioned above, as an alternative, also an absolute update inside a defined dynamic range may be provided.

In addition, a Timing Advance (TA) Update may be applied to a selected multi-carrier or a single carrier waveform so that the previously applied symbol timing in the uplink transmission relative to the downlink reception may be updated by a relative increase or decrease of time delay for the subsequent transmission of symbols. These TA updates may target e.g. at having in-phase symbol reception from multiple UEs at a BS receiver. Such alignment of reception time of symbols provides orthogonality, which reduce uplink interference and increase uplink capacity significantly.

Further, a Directivity update may be applied to a selected multi-carrier or a single carrier signal waveform so that the previously applied phase difference between multiple transmit antennas on a symbol may be updated to another phase difference between multiple antennas for the forthcoming transmission of symbols. The phase rotation between symbols transmitted from different antennas may be an absolute phase difference or a relative phase difference, updated from the phase difference applied in the earlier transmission.

[FIRST EMBODIMENT]

IMPLICIT AND EXPLICIT ASSOCIATION

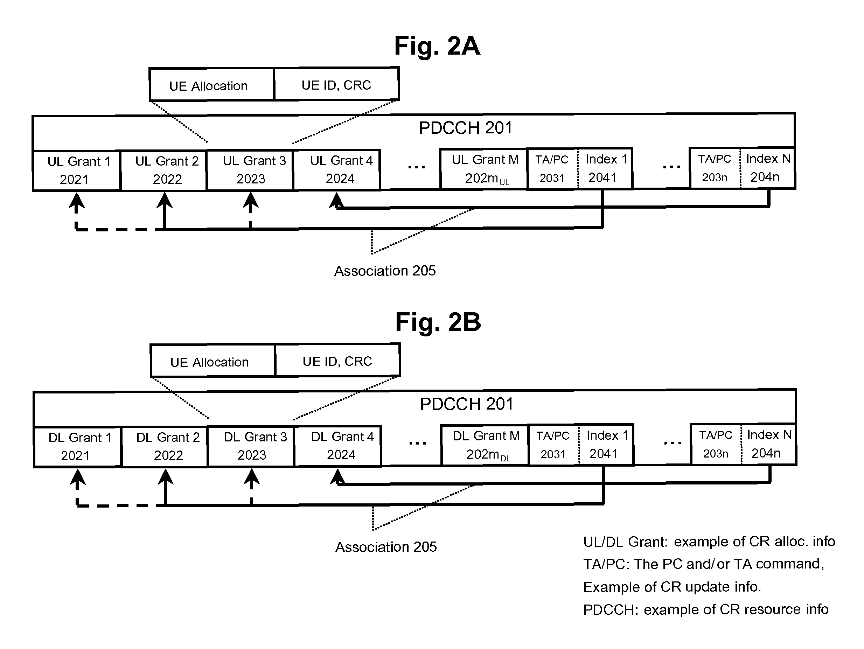

One possible association principle is illustrated e.g. in Fig. 2A. A physical DL control channel PDCCH 201, as an example of communication resource (CR) information, may comprise from one up to $M_{UL}$ UL scheduling grants 2021, 2022, 2023, 2024,...,202m as examples of CR allocation information. Alternatively, the up to $M_{UL}$ UL scheduling grants may each be conveyed in a separate PDCCH. Each UL scheduling grant may comprise a user equipment identification UE ID, a cyclic redundancy code CRC, and a UE allocation for Physical Resource Blocks (PRBs) on shared data channels. Every PDCCH appears in transmission resources of e.g. one or more control channel candidates or control channel elements as shown in Fig. 1 mapped to the Physical Resource Elements in the transmission frames. The PDCCH 201 may further comprise up to N TA/PC updates 2031, 203n, as examples for CR update information. The TA/PC updates 2031, 203n may be respectively associated with one of the UL scheduling grants $2021,...,202m_{UL}$ e.g. via indices 2041,...,204n, thus resulting in associations 205.

As an alternative, another possible association principle is illustrated e.g. in Fig. 2B. The PDCCH 201 may also comprise from one up to $M_{DL}$ DL scheduling grants 2021, 2022, 2023, 2024,..., $202m_{DL}$ as examples of CR allocation information. Alternatively, the up to $M_{DL}$ DL scheduling grants may each be conveyed in a separate PDCCH. It is to be noted that the amount of the number $M_{UL}$ of the UL scheduling grants 2021,..., $202_{UL}$ and the number $M_{DL}$ of the DL scheduling grants 2021,..., $202_{DL}$ may be equal or, as an alternative, different numbers. Each scheduling grant may comprise a user equipment identification UE ID, a cyclic redundancy code CRC, and a UE allocation for Physical Resource Blocks (PRBs) on the shared data channels. Every PDCCH appears in transmission resources of e.g. one or more control channel candidates or control channel elements as shown in Fig. 1 mapped to the Physical Resource Elements in the transmission frames. The PDCCH 201 may further comprise up to N TA/PC updates 2031, 203n, as examples for CR update information. The TA/PC updates 2031, 203n may be respectively associated with one of the DL scheduling grants 2021,...,202m e.g. via indices 2041,...,204n, thus resulting in associations 205. It is to be noted that this alternative is applicable to the case when the UE has scheduled DL transmissions, but does not have any scheduled UL transmissions.

In case of implicit association 205 between UE ID and TA/PC update, the presence of the indices 2041,...,204n may not required, but the association(s) 205 may be signaled by other means, e.g. on a higher signalling layer or even be associated permanently in a fixed predetermined way, or there may be a default association that my be changed by higher layer signaling, if desired. In that case, the UE may decode the UL scheduling grant after reception. Then, the UE 1) is configured to inspect if a TA/PC update is possibly associated to the UL scheduling grant and 2) to decode the resources corresponding to TA/PC updates if necessary (e.g. when coded with a CRC).

A further option of implicit association 205 resides in fixedly associating a TA/PC update 2031,...,203n with a subset of the UL/DL scheduling grants 2021,..., $202m_{UL/DL}$ and transmitting the TA/PC update right together with the TA/PC updates of this subset. That means a constant overhead would be attached to the UL/DL scheduling grants in this subset, but not to the other UL/DL scheduling grants. UEs that need to get TA/PC updates can then be scheduled to use one of the UL/DL scheduling grants of this subset, while the remaining UEs could be scheduled to use any of the remaining grants. However, as the subset that does include TA/PC updates is set in advance, no blind decoding attempts from the UE are required and therefore, it does not complicate the decoding process of the UE. Therefore, the TA/PC updates do not need to be coded individually but can be coded with the UL/DL scheduling grant.

Also mixed variants between implicit and explicit associations are possible. For example, some TA/PC updates may be implicitly associated with UL/DL scheduling grants (or CCEs or candidates etc., for the sake of descriptive simplification, the rest of this section refers CCEs) while other ones may be associated explicitly. This is a compromise between full flexibility of explicit association and saving overhead for the indices required for explicit association. A further variant resides in at least some TA/PC updates being explicitly associated not with all possible CCEs, but only with a subset of those. This will reduce the number of bits required for addressing the subset compared to the full set. One variant of the latter that still maintains full flexibility resides in explicitly selecting a set of CCEs and then associating e.g. TA/PC updates with the elements of this set implicitly. The first TA/PC update may be associated with the first element of the set and so on, but other associations are possible as well. To select ns elements for a subset out of a total set of nt elements, there are nt! / (ns! * (nt-ns)! ) possibilities, "!" being the factorial operator. This leads to less than the nt ^ ns possibilities to make ns individual associations, each to one of the nt elements, "^" being the exponentiation operator. This allows reducing the signaling amount i.e. the number of bits to signal the association. While the difference is typically not too big for large nt and small ns, for the case where both nt and ns are not too large or of similar size, the difference may well be sufficient to save at least one bit for signaling.

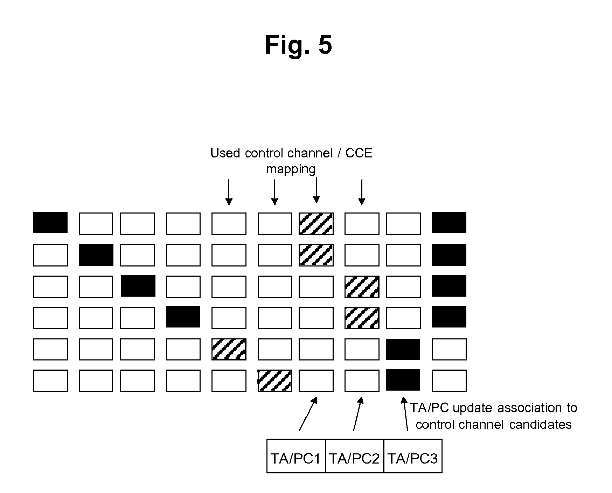

Another option to transmit the set of TA/PC updates resides in using one of the UL/DL scheduling grants (e.g. a grant for a predetermined dummy UE ID) and using the signaling space provided by the UL/DL scheduling grant for signaling this set of commands. In this way, there is no constant overhead in case no TA/PC updates are to be transmitted. The expense is additional blind detection with this predetermined UE ID. Depending on the detail of the coding, this may actually not be any additional overhead (if e.g. the CRC is bit wise exclusive or combined with the UE ID), or it may be an additional blind decoding attempt. In the latter case, it is possible to limit the set of possible locations even further than the set of grants. For example, in Fig. 5 it may be sufficient to only consider to use the first, 7th or last column, which would allow to aggregate either 1, 2 or 4 CCEs, which may provide in turn sufficient flexibility.

In case of explicit association 205 between UE ID and TA/PC update 2031,...,203n, the associated control channel candidate or control channel element is explicitly indicated on each of TA/PC update e.g. by means of the indices 2041,...,204n. Each UE having received an UL scheduling grant or a DL scheduling grant needs to decode also the TA/PC updates 2031,...,203n. The additional time consumed for the search and decoding of the TA/PC after a successful decoding of the scheduling grant is not that critical, because e.g. the L2 multiplexing, Transport Block creation and encoding can start immediately after the scheduling grant is available, and PC/TA are needed only beginning at the time instant of transmitting e.g. a first symbol of an UL sub-frame.

In summary, the association 205 between TA/PC updates 2031,...,203n and control channel candidates or control channel elements can e.g. be set by broadcasting the association(s) 205 via the System Information providing information e.g. about the network configuration within a cell, or by higher layer signalling. Alternatively, the association can be signaled together or as a part of the TA/PC signalling. For example, the index $2041,...,204n$ is attached with the TA/PC update $2031,...,203n$ providing information to which control channel candidates or control channel elements the TA/PC update $2031,...,203n$ refers to. The association 205 may be effected between TA/PC updates $2031,...,2031$ and UL scheduling grants $2021,...,202m_{UL}$ or DL scheduling grants $2021,...,202m_{DL}$, respectively.

As described herein below in further detail, the association 205 of the UL/DL scheduling grants $2021,...,202m_{UL/DL}$ with the TA/PC updates $2031,...,203n$ may be a one-to-one association, or, as an alternative, may be unique for the UL/DL scheduling grants $2021,...,202m_{UL/DL}$, as indicated by the dashed arrows pointing, as examples, to the functional blocks of the UL/DL scheduling grants $2021_{UL/DL}$ and $2023_{UL/DL}$.

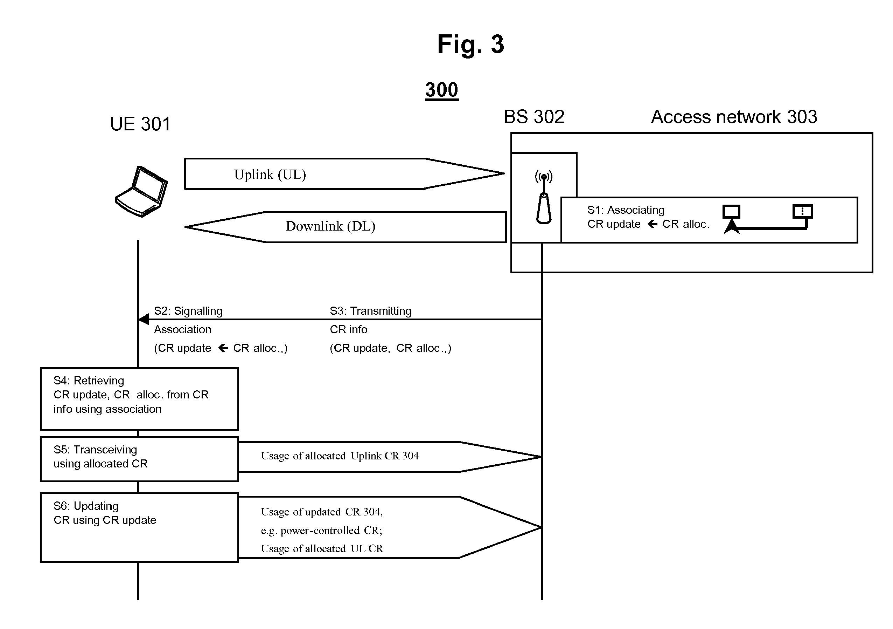

Fig. 3 shows the method for allocating CRs according to the present invention. Signalling between elements is indicated in horizontal direction, while time aspects between signalling are reflected in the vertical arrangement of the signalling sequence as well as in the sequence numbers.

As shown in Fig. 3, a communication network 300 may comprise a user equipment UE 301, a base station BS 302 and an access network 303. The BS 302 may be a portion of an access entity (not shown) providing access for the UE 301 to the access network 303. As shown in Fig. 3, communication or signalling from the UE 301 to the BS 302 is referred to as Uplink (UL), and communication or signalling from the BS 302 to the UE 301 is referred to as Downlink (DL).

In step S1, e.g. the BS 302 or any other entities in the access network 303, performs associating communication resource (CR) update information (e.g. TA/PC updates $2031,...,203n$ according to Fig. 2) with CR allocation information (e.g. UL/DL scheduling grants $2021,...,202m_{UL/DL}$ or UE allocation, respectively). The CR allocation information and the associated CR update information may be a portion of CR information (e.g. the PDCCH 201). Further alternatives for this associating operation are set out in further detail herein below.

In step S2, the association(s) 205 are signaled from the BS 302 e.g. to the UE 301 e.g. implicitly (see e.g. above-described System Information or higher layer signalling) or explicitly (see e.g. above-described indices $2041,...,204n$).

In step S3, the CR information (e.g. PDCCH 201) comprising the CR update information and the CR allocation information are transmitted from the BS 302 to the UE 301. This transmitting operation is set out in further detail herein below.

It is to be noted that the above steps S2 and S3 may be performed in that order or in a reverse order, on the same communication layer or on different communication layers, substantially simultaneously (as shown in Fig. 3) or timely spaced, as long as provision of the CR update information $2031,...,203n$, the CR allocation information $2021,...,202m_{UL/DL}$ and the association(s) 205 to the UE 301 remains ascertained. Alternatively, the CR update information may be logically associated also to the preceding DL scheduling grants.

In step S4, the UE 301 performs retrieving the CR allocation information $2021,...,202m_{UL/DL}$ and the associated CR update information $2031,...,203n$ from the transmitted CR information 201 based on the signaled association(s) 205. This retrieval operation is set out in further detail herein below.

In step S5, the UE 301 performs transceiving signals using the allocated CR 304 allocated e.g. by the BS 302 or the access network 303.

In step S6, the UE 301 performs updating the CR based on the communication resource update information (e.g. power-controlling the allocated CR by increasing/decreasing transmitting power according to the PC update received. As an example, increased transmitting power is shown in Fig. 3 by a thick arrow extending from the functional block of step S6).

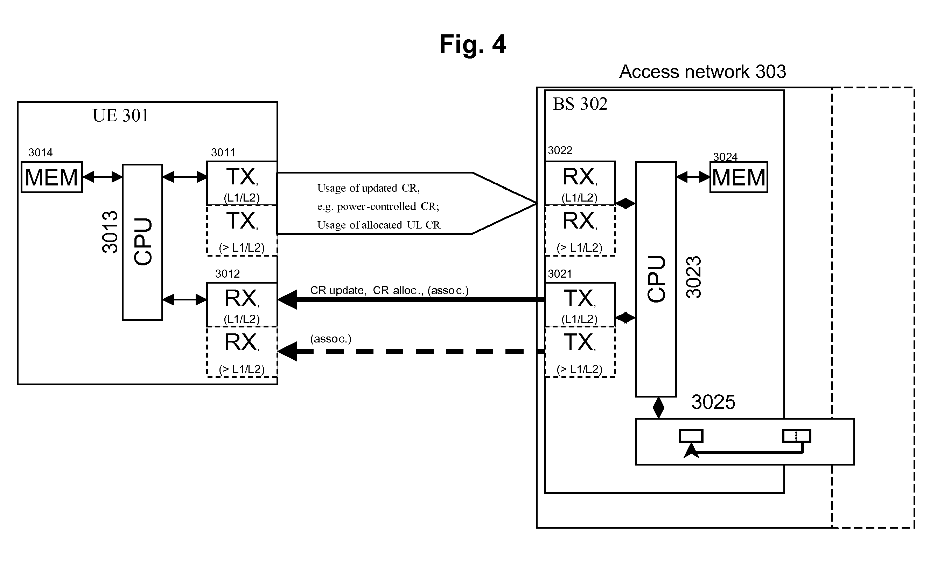

Fig. 4 shows apparatuses (i.e. user equipment 301 and base station 302) according to the present invention. The BS 302 of the access network 303 comprises a sender TX 3021, a receiver 3022, a central processing unit (CPU) 3023, a memory 3014 and means for associating 3025. The CPU 3023 may be configured to process various data inputs and to control the functions of TX 3021, the RX 3022, the memory 3024 and means for associating or associator 3025. The memory 3024 serves for storing code means for carrying out e.g. the method according to the invention, when run on the CPU 3023, and e.g. for storing the CR update information $2031,...,203n$, the CR allocation information $2021,...,202m_{UL/DL}$, and optionally the indices $2041,...,204n$. The RX 3022 as well as the TX 3021 may optionally be configured to receive (transmit) on different communication layers, as described herein above. It is to be noted that the TX 3021 and the RX 3022 may be provided as separate means (as shown in Fig. 4), but may also be provided as an integral transceiver (not shown). Furthermore, the associating means 3025 may also be, in part or as a whole, comprised in an entity different from the BS 302. As an example of a communication resource (CR), an uplink CR 304 (e.g. an uplink channel for uplink transmission from the UE 301 to the BS 302) is shown in Fig. 4.

The means for associating 3025 of the BS 302 may be configured to associate communication resource update information $2031,...,203n$ with communication resource allocation information $2021,...,202m_{UL/DL}$, the communication resource allocation information $2031,...,203n$ and the associated communication resource update information $2031,...,203n$ each being a portion of communication resource information 201.

The means for sending 3021 of the BS 302 may be configured to signal the association 205 of the communication resource update information 2031,...,203n with the communication resource allocation information 2021,...,202m$_{UL/DL}$, and also may be configured to transmit the communication resource information 201. As mentioned above, the communication resource update information 2031,...,203n may be signaled/transmitted on the same communication layer (e.g. L1/L2 signalling) as the communication resource allocation information 2021,...,202m$_{UL/DL}$, or alternatively on a higher communication layer.

As also shown in Fig. 4, the UE 301 comprises a sender TX 3011, a receiver or means for receiving 3012, a central processing unit CPU 3013 and a memory 3014. The CPU 3013 may be configured to process various data inputs and to control the functions of TX 3011, the RX 3012 and the memory 3014. The memory 3014 serves for storing code means for carrying out e.g. the method according to the invention, when run on the CPU 3013. The RX 3012 as well as the TX 3011 may optionally be configured to receive or transmit on different communication layers, as described herein above. It is to be noted that the TX 3011 and the RX 3012 may be provided as separate means (as shown in Fig. 4), but also be provided as an integral transceiver (not shown).

The means for receiving 3012 of the UE 301 may be configured to receive the transmitted communication resource information 201 comprising communication resource allocation information 2021,...,202m$_{UL/DL}$ and associated communication resource update information 2031,...,203n, and may be configured to receive the signaled association 205 of the communication resource update information 2031,...,203n with the communication resource allocation information 2021,...,202m$_{UL/DL}$. As mentioned above, the communication resource update information 2031,...,203n may be received on the same communication layer (e.g. L1/L2 signalling) as the communication resource allocation information 2021,...,202m$_{UL/DL}$, or alternatively on a different communication layer.

The CPU 3013 and e.g. the means for receiving 3012 and the memory 3014 of the UE 301 may be configured to retrieve the communication resource allocation information 2021,...,202m$_{UL/DL}$ and the associated communication resource update information 2031,...,203n from the communication resource information 201 based on the signaled association 205.

Further, the CPU 3013 and e.g. the means for sending 3011, the means for receiving 3012 and the memory 3014 of the UE 301 may also be configured to transceive signals using the allocated CR (e.g. an Uplink transmission channel, uplink CR hereinafter) based on the communication resource allocation information 2021,..., 202m$_{UL/DL}$.

Additionally, the CPU 3013 and e.g. the means for sending 3012 and the memory 3014 of the UE 301 may also be configured to update the communication resource 304 (e.g. Uplink CR) based on the communication resource update information 2031,...,203n.

In addition to the description given above e.g. in the section labeled "IMPLICIT AND EXPLICIT ASSOCIATION", the following description provides embodiments of the present invention with particular regard to the terms "associating" and "association".

ASSOCIATION VIA CONTROL CHANNEL CANDIDATES

In Fig. 5, as an example, the association of a TA/PC update 2031,...,203n to a UL/DL scheduling grant 2021,..., 202m$_{UL/DL}$ by means of control channel candidates 1 to 10 (1$^{st}$ to 10$^{th}$ columns) is illustrated. The set of candidate control channels monitored by the UE 301 may contain at least one control channel candidate (columns with functional blocks TA/PC 1, TA/PC2 and TA/PC 3 pointing to the same) which is associated with a TA/PC update 2031,...,203n.

As mentioned herein below, the BS 302 may decide to allocate for UE 301 at least one control channel candidate (Fig. 5: "Used control channel/CCE mapping", 5$^{th}$ to 8$^{th}$ control channel candidates) indicated by the functional blocks of the CCEs being hatched from bottom left to top right. According to Fig. 5, control channel candidates 7 to 9 are associated with a respective TA/PC update 2031,...,203n. When decoding the control channel candidates, particularly the 7$^{th}$ or 8$^{th}$ control channel candidate, the UE 301 may be configured to detect the association 205 of these 7$^{th}$ or 8$^{th}$ control channel candidates, to retrieve the corresponding TA/PC update 2031,...,203n (TA/PC 1 or TA/PC2 according to Fig. 5, TA/PC 3 remains unused in this example), and to update the corresponding UL resource according to the retrieved TA/PC update 2031,...,203n e.g. for the subsequent UL transmission.

In an example of the present embodiment, the association 205 of e.g. the scheduling grant (as an example for the communication resource update information 2021,...,202m) to the control channel candidates may be such that a scheduling grant of a given format (e.g. format 1) always appears in an a-priori known control channel candidate position, if it is currently present in the signalling channel. Thus, e.g. the scheduling grant of format 1 may be tested at a receiver from limited positions of control channels only. A simple example is that for the occurrence of downlink (DL) scheduling grant related to communication resource update information 2031,...,203n, or measurement, radio access or networking information, that scheduling grant may be positioned as the first control channel always. This association 205 will relieve the receiver to process and search such information from any other control channel candidate positions. This is applicable e.g. to a terminal operating in idle mode, in which the terminal may particularly search and decode only communication resource update information 2031,...,203n, or measurement, radio access or networking information without any need to search and decode any allocations for data payload.

ASSOCIATION VIA CONTROL CHANNEL ELEMENTS

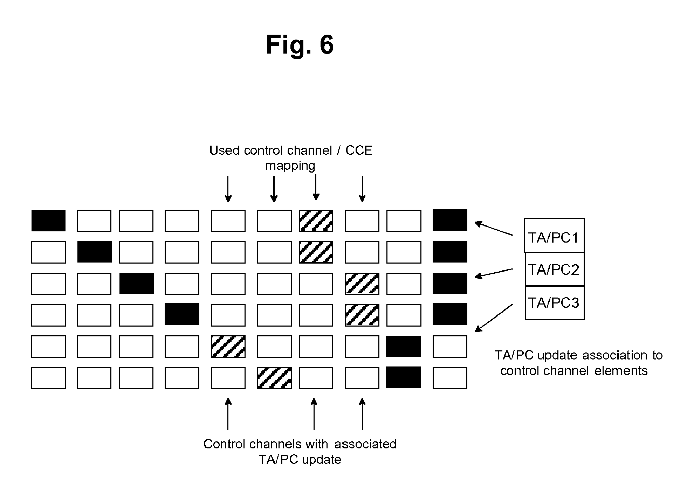

As shown in Fig. 6, as an alternative to the above "ASSOCIATION VIA CONTROL CHANNEL CANDIDATES", the association 205 of the TA/PC update $203_1$,...,$203_n$ to a UL scheduling grant $202_1$,...,$202m_{UL/DL}$ may also be effected by means of control channel elements 1 to 6 (1st to 6th lines according to Fig. 5). The set of candidate control channels (CCEs) monitored by the UE 301 may contain at least one control channel element which is associated with a TA/PC update $203_1$,...,$203_n$. This association 205 may apply to other than TA/PC signals, a further embodiment of the present invention may include response signals as channel state information or acknowledgements.

As mentioned herein below, the BS 302 may decide to allocate for UE 301 at least one control channel candidate (Fig. 6: "Used control channel/CCE mapping", 5th to 8th control channel candidate) indicated by the functional blocks of the CCEs being hatched from bottom left to top right. According to Fig. 6, control channel elements (CCEs) 1, 3, and 5 are associated with a respective TA/PC update $203_1$,...,$203_n$. When decoding the control channel candidates, particularly the 5th, 7th or 8th control channel candidates (Fig. 6: "Control channels with associated TA/PC update"), the UE 301 may be configured to detect the association 205 of these 1st, 3rd, or 5th control channel element (CCE), to retrieve the corresponding TA/PC update $203_1$,...,$203_n$ (TA/PC 1, TA/PC2 or TA/PC 3 according to Fig. 5), and to update the corresponding UL resource according to the retrieved TA/PC update $203_1$,...,$203_n$ e.g. for the subsequent UL transmission. It is to be noted that in this example, also control channel candidates 1, 3, 9, and 10 would also be associated, via control channel elements 1, 3, and 5, with at least one TA/PC update $203_1$,...,$203_n$, but these control channel candidates 1, 3, 9, and 10 are considered to be not allocable by the UE 301 for any reason.

ALTERNATIVE ASSOCIATIONS

Alternatively, special associations 205 (e.g. pointers) may be defined that i) point to all the CR allocation information $202_1$,...,$202m_{UL/DL}$, or ii) point to possibly only a part of all the CR allocation information $202_1$,...,$202m_{UL/DL}$ e.g. only for the allocations using intra TTI hopping, typically the persistently scheduled UEs, or iii) even indicate that e.g. the PC is applicable to a plurality of UEs 301. This may be favorable if e.g. all the UEs 301 e.g. need to be power-controlled (e.g. power up/down) because of a sudden rise/reduction in interference from (or to) neighboring cells. Thus, few indices may be reserved as special associations 205 to indicate which specific (sets of) UEs 301 are addressed. In that case, as shown in Fig. 2, association(s) 205 which is (are) unique for the CR allocation information $202_1$,...,$202m_{UL/DL}$, but is (are) not a one-to-one association, may be used.

TRANSMISSION OF THE COMMUNICATION RESOURCE UPDATE INFORMATION

As described hereinabove, TA/PC updates $203_1$,...,$203_n$ may be transmitted e.g. on a DL control channel element (elements) (CCE/CCEs) that is especially reserved for them. Furthermore, TA/PC updates $203_1$,...,$203_n$ may be encoded separately from the corresponding scheduling grants $202_1$,...,$202m_{UL/DL}$. With respect to each other, the multiple TA/PC updates $203_1$,...,$203_n$ may be encoded either separately or jointly, possibly with a CRC. In the case of joint coding, the code rate for the TA/PC updates $203_1$,...,$203_n$ may be selected e.g. according to the requirements of the UL/DL scheduling grant $202_1$,...,$202m_{UL/DL}$ having the lowest code rate from the UL grants $202_1$,...,$202m_{UL/DL}$ with associated TA/PC update $203_1$,...,$203_n$, thus, e.g. requiring blind decoding at the UE 301.

Furthermore, TA/PC updates $203_1$,...,$203_n$ may be mapped directly on DL resource elements (e.g. control channel elements) that are especially reserved for them. Again, the TA/PC updates $203_1$,...,$203_n$ may be encoded either jointly or separately, or protected by spreading. The TA/PC updates $203_1$,...,$203_n$ of different users may e.g. be frequency, or time divided or code division multiplexed on the resource elements (except with joint encoding). It is obvious that the control channels for different UEs may apply a reasonable combination of the aforementioned multiplexing schemes in time-, frequency-and code-domains.

UPDATING COMMUNICATION RESOURCES

There are multiple possibilities for allocating resources for the TA/PC updates $203_1$,...,$203_n$ and e.g. for multiplexing the TA/PC updates $203_1$,...,$203_n$ to the PDCCH 201. The amount of resources allocated for TA/PC updates $203_1$,...,$203_n$ remains semi-statically constant. In order to maintain a constant allocation of communication resources (CRs) for TA/PC updates $203_1$,...,$203_n$, the number of TA/PC updates $203_1$,...,$203_n$ e.g. per subframe may vary according the used coding scheme. The resources allocated for TA/PC updates $203_1$,...,$203_n$ may e.g. be set on System Information or by higher layer signalling.

In addition, there are multiple possibilities for signalling TA/PC updates $203_1$,...,$203_n$:

- An information element (e.g. one bit) may be added to each TA/PC entry $203_1$,...,$203_n$ indicating whether TA or PC is updated in case that the number of bits for TA and PC updates is equal.
- Each TA/PC update $203_1$,...,$203_n$ may include separate fields for both TA and PC updates, especially if either TA or PC or both may be updated simultaneously. A variant of this is a field, which carries the longer control word (e.g. PC) and a leading bit, which indicates that the shorter control word (e.g. TA) is actually in use. This allows a) the longer control word to be signaled alone, b) the shorter control word to be signaled alone (with unused bits set to 0, and c) both control words to be signaled simultaneously so that the shorter control word is present fully, but the resolution (accuracy) of the longer control word may be reduced to the number of bits remaining unused from the shorter control word.

- E.g. on each sub-frame, a permanent number of TA/PC updates 2031,...,203n may be reserved for TA only, while the remaining TA/PC updates 2031,...,203n may be used for PC (e.g. with 3 updates/sub-frame, update #1 is used for TA and updates #2 and #3 are used for PC). In this case, the selection between TA and PC update 2031,..., 203n may be performed implicitly by the selection of the CCE or control channel candidate used for the UL scheduling grant 2021,...,202m$_{UL/DL}$.
- Alternatively, more general implementations for the TA/PC updates 2031,...,203n are possible as well: there may be some number of possible TA/PC command combinations e.g. 4 bits allowing 16 different commands. It is not necessary to split bits for TA/PC strictly, but it is also possible to assign some of the 16 commands to specific meanings for TA/PC, e.g. there may be 3 possible values for Power control (e.g. +1db, -1dB and -3dB power change) and 5 values for TA. Then there are 3*5=15 combinations that can be assigned 15 out of the 16 possible commands. The last command may be used for a specific action, e.g. power control step of -5dB but no change in TA. In other words, some of the possible update values correspond to TA updates, some values to PC updates and some to a combination of both TA and PC updates.

Alternatively, e.g. a PC command 2031,...,203n may need to be repeated. However, the UEs 301 receiving the PC command 2031,...,203n more often, may have to ignore the PC repeated command, based on either a kind of sequence number or timer or both. This is in particular relevant for the case that commands are sent targeting not only a single UE but multiple UEs as described above.

Alternatively, since UEs 301 may have different DRX (Discontinuous Reception) cycles, a PC command 2031,..., 203n may also need to be repeated. However, the UEs 301 receiving the PC command 2031,...,203n more often, may have to ignore the repeated PC command, based on either a kind of sequence number or timer or both. In this case, e.g. sequence number information can be part of the index as well (doubling the number of indices to reserve) or can be part of the "command" 2031,...,203n itself: There is typically no reason that TA control is needed for multiple UEs 301 because it is unlikely that several UEs change their location at the same time (an exception may be UEs traveling in a bus or train on similarly the same transport vehicle or at least at the same speed in the same direction e.g. multiple cars in a row). Therefore, the TA part can be used to convey a sequence number.

Furthermore, the UE 301 may be configured to apply both such a common and an independent command for an individual PC command 2031,...,203n due to path-loss changes or other reasons. There may be also cases where the UE 301 may be configured to apply multiple individual commands; this could be used to make infrequent larger steps without allocating more bits to every command field. For example, this may be used for TA changes for infrequent round the corner events requiring unusually large TA changes and possibly also power changes.

[SECOND EMBODIMENT]

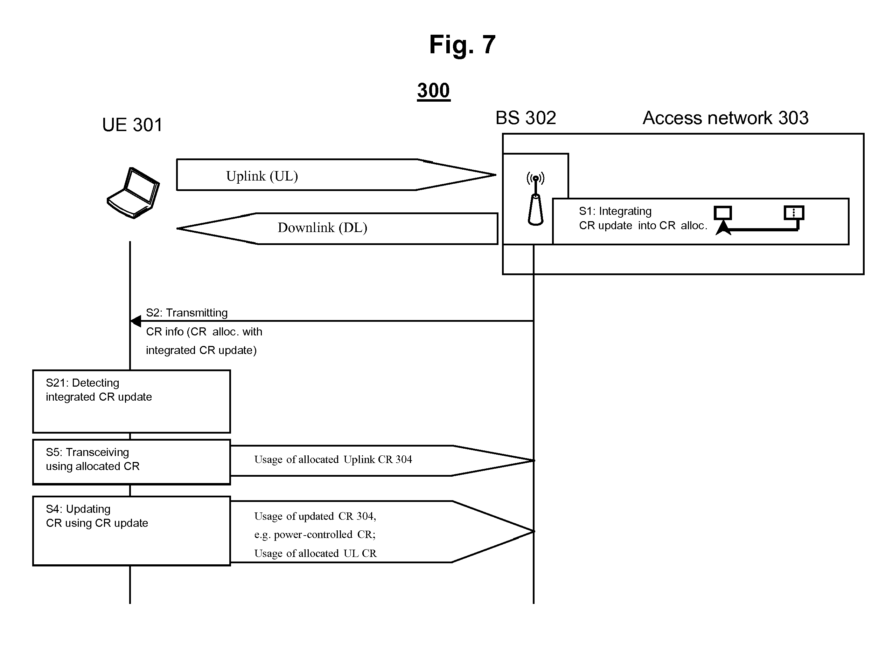

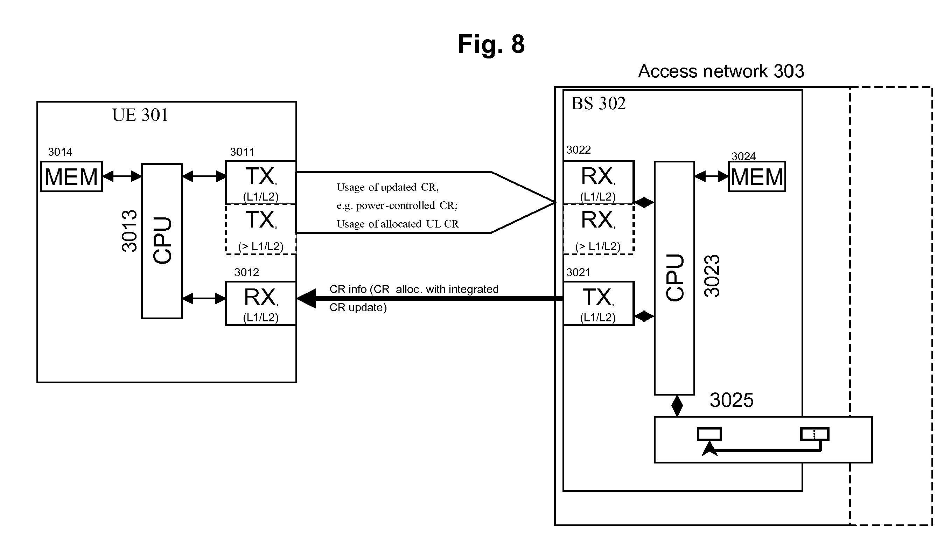

In the following, the second embodiment according to the present invention is described with reference to Figs. 7 and 8. It is to be noted that any description of means identical or substantially identical with those of the first embodiment (UE 301, BS 302, Access network 303, memories 3014 and 3024, sender 3011, receiver 3022, and CPUs 3013 and 3023) is omitted.

As shown in Figs. 7 and 8, the method and the one apparatus according to the second embodiment comprise:

- in step S1 or means for integrating 3025, integrating of the communication resource update information (2031 to 203n) into the communication resource allocation information (2021 to 202m$_{UL/DL}$) is performed, the communication resource allocation information and the associated communication resource update information each being a portion of communication resource information (201); and
- in step S2 or the means for sending 3021 e.g. in conjunction with the CPU 3023 and the memory 3024, transmitting of the communication resource information is performed e.g. on the L1/L2 control channel.

As also shown in Figs. 7 and 8, the method and the another apparatus according to the second embodiment comprise:

- in step S2 or the means for receiving 3011 e.g. in conjunction with the CPU 3013 and the memory 3014, receiving of the transmitted communication resource information (201) comprising communication resource allocation information (2021 to 202m$_{UL/DL}$) comprising integrated resource update information (2031 to 203n) is performed;
- in optional step S21 or optionally e.g. in the CPU 3013 and the memory 3014, detecting of the integrated communication resource update information based e.g. on an invalid format of the communication resource information is performed;
- steps S3 and S4 are substantially identical with steps S5 and S5, respectively, according to the first embodiment of the present invention, with the exception that step s4 or the CPU 3013 e.g. in conjunction with the memory 3014 may optionally be configured to perform updating of the communication resource based on the detected integrated communication resource update information.

In summary, according to the second embodiment the present invention e.g. the L1/L2 control channel may be used. Although the TA and PC updates are not acknowledged, the robustness of the signalling may be comparable to the one of higher layer signalling. Furthermore, if relative signalling is used, then neither TA nor PC signalling is so critical regarding lost signalling: If the UE does miss a command and consequently does not apply it, a so-called NodeB will realize that the power or timing is still not appropriate and will send another TA/PC command that will cure the loss of the first one.

One option according to the second embodiment of the present invention for signalling on L1/L2 control channel is to include or integrate TA and/or PC updates into each UL/DL scheduling grant, as described herein below. The overhead per each transmitted TA/PC update is minimal, while this solution creates only a minimum constant overhead when no TA and/or PC updates are transmitted. If, due to the low rate of TA and/or PC updates, the constant non-essential overhead in case of no TA and/or PC updates being transmitted becomes larger, then this solution may be further optimized by the further embodiments described herein above.

An alternative option according to the second embodiment of the present invention resides in a specific UL/DL scheduling grant e.g. for at least one of TA and/or PC updates. The specific UL/DL scheduling grant containing e.g. TA and/or PC can be identified by an invalid format of the information carried by the L1/L2 control channel. The signalling overhead per each transmitted TA/PC update was estimated to be less than 40 bits, and this solution does not cause any overhead when no TA or PC updates are transmitted.

Yet another option according to the second embodiment of the present invention is to define a specific L1/L2 signalling e.g. for TA and/or PC updates.

[ALTERNATIVE THIRD EMBODIMENT]

Concerning the alternative third embodiment, in wireless communication system e.g. in LTE the TA and PC commands need to be signaled to the UE. There may be several ways of doing this signalling, e.g. via MAC layer or via L1/L2 control signalling. It is to be noted that the above chapters "TRANSMISSION OF THE COMMUNICATION RESOURCE UPDATE INFORMATION" and "UPDATING COMMUNICATION RESOURCES" as well as the chapter "NON-SCHEDULED UEs" apply in equal manner to this third alternative embodiment.

After initial TA/PC commands, the number of bits required to signal for TA or PC command is assumed to be very modest, e.g. around 2 to 4 bits. Also the average rate of TA and PC is assumed to be relative low in LTE. This alternative third embodiment utilizes that information.

As mentioned above, e.g. in downlink (DL), L1/L2 control signalling is sent significantly more often (E.g. in LTE 1000 Hz) than TA/PC commands which need to be signaled e.g. with 2-3 Hz average frequency per UE. Thus including PC or TA commands to each uplink scheduling grant is not efficient. On the other hand, MAC layer signalling results in large overhead per command. Due to possibly large number of UEs maintained time synchronized and under power control, this may result in significant aggregate overhead.

Thus other ways to signal these commands to UE has been proposed. This alternative third embodiment includes one possibility to signal these bits to the UE.

According to the alternative third embodiment, e.g. CCE or scheduling grant positions (control channel candidates) known e.g. from predetermined specifications or by user or system specific higher layer signalling (RRC signalling), indicate that PC or/and TA command would be included in the scheduling grant. The positions which would include PC command could be different from positions including TA command to be able to separate these commands. Alternatively, TA and PC commands may share the positions, and TA / PC commands are separated with methods discussed in the first and second embodiments.

When TA/PC command is included in the UL/LD scheduling grant, the used rate-matching may be configured to take this into account and to adjust the coding so that the modified UL/DL scheduling grant will utilize the same amount of physical resources as e.g. a normal UL/DL scheduling grant, despite carrying in addition the TA/PC information, i.e. the coding rate may be slightly higher only for these grants.

Thus, the UE may be configured to know always in which scheduling grant positions different coding and rate-matching is utilized and no blind decoding is needed due to TA/PC. In other words, the number of necessary blind decoding attempts is not increased.

The signaling scheme of the alternative third embodiment, although described with reference to signaling TA or PC commands, is not limited thereto. The same principle can be used to signal e.g. parameters needed for multi-antenna technique.

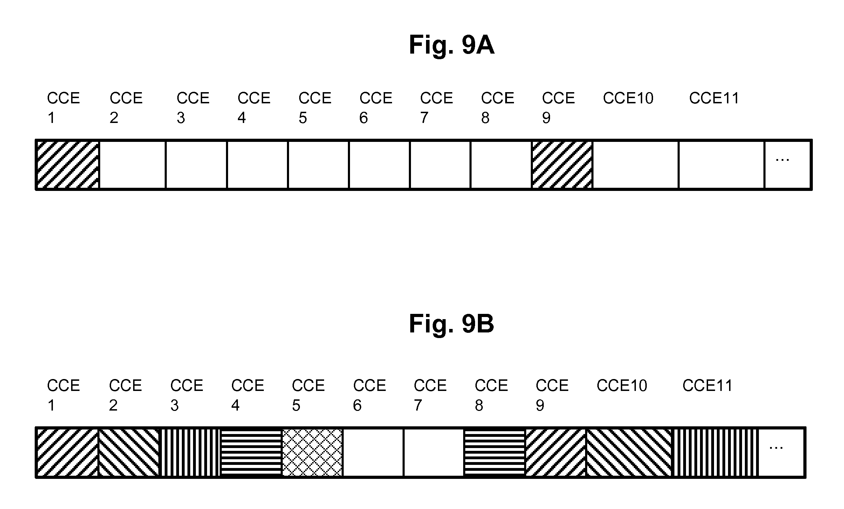

Fig. 9A shows the alternative third embodiment related to the signalling principle for the TA and/or PC updates with the UL/DL scheduling grants or control channel elements according to the present invention.

E.g. for the L1/L2 control signalling, different rate matching need to be implemented e.g. in the eNode-B/BS 302 to produce scheduling grant with/without TA and/or PC bits. In the reception of L1/L2 control signalling, the UE needs to know the possible scheduling grants which need to be decoded with different rate matching parameters than normal scheduling grant.

As an implementation example e.g. for LTE, the resources for L1/L2 control signalling may be divided to control channel elements CCEs. The number of CCEs in the L1/L2 control signal varies with bandwidth and number of OFDM (Orthogonal Frequency Division Multiplex) symbols assigned to L1/L2 control signalling. These CCE elements can be ordered to the logical order as shown in Fig. 9A. One control channel may need, in LTE system, e.g. from 1 to 8 CCE to transmit a UL/DL scheduling grant. The UE 301 may need to perform a limited number of blind decoding attempts to know which logically consecutive CCEs are assigned to its UL/DL scheduling grant.

The idea of the alternative third embodiment may be summarized such that the use of certain CCE indicates that TA and/or PC command is included in the UL/DL scheduling grant. Thus, the UE 301 which is assigned logical control channel candidates with these specific CCE knows that different coding is utilized and thus it does not need to have additional blind decoding attempts.

In Fig. 9A, e.g. CCE 1 and CCE 9 indicate that TA and/or PC commands bits are included into the scheduling grant (indicated by these CCEs being hatched from bottom left to upper right). When a UE tries to find its scheduling grant, and whenever CCE1 (or CCE9) is included into the control channel candidate, e.g. when UE looks for a UL/DL scheduling grant coded over CCE1-CCE4, the UE 301 knows that the UL/DL scheduling grant will include TA and/or PC bits according to predefined rules (UE knows is it TA bits or PC bits or both), and thus UE also knows which coding parameters are used in this scheduling grant. On other hand, whenever CCE1 or CCE9 are not included into the control channel candidate, the UE 301 may be configured to look for scheduling grant with normal coding parameters. Note that instead of having specific CCEs indicate the presence of TA and/or PC commands, while otherwise such commands would be absent, an alternative implementation could also have specific CCEs indicate the absence of TA and/or PC commands, while otherwise such commands would be present. This alternate implementation will yield similar results, the difference is if a scheduling grant spans multiple CCEs, only some of the indicating absence/presence of TA and/or PC commands. Yet another alternative is to make a majority decision in this case, i.e. commands are present in a scheduling command, if the majority of the CCEs used for these scheduling commands indicates so. Instead of a majority decision also other intermediate rules can be set, including specific tie breaking rules.

Fig. 9B shows a modification of the alternative third embodiment.

According to the modification of the alternative third embodiment, a decision whether a TA/PC update is included in the UL/DL scheduling grant, may not only include the CCE but also other parameters e.g. user specific information. E.g. the CCEs that indicate presence of TA / PC may not be the same for all users, but may depend on the user (e.g. User identity). In this way it is even possible to include TA/PC updates for all users (all users are scheduled using a CCE that indicates this for them) or none of the users for the same frame and the same selection of users, thus avoiding one of the constraints of the basic scheme, see Fig. 9B. One example of a possible allocation is indicated in the following: e.g. a user #1 may be assigned with CCEs 1 and 9, hatched from bottom left to upper right; a user #2 with CCEs 2 and 10, hatched from bottom right to upper left; a user #3 with CCEs 3 and 11, hatched from bottom to top; a user #4 with CCEs 4 and 8, hatched from bottom left to right; and a user #5 with CCE 5, criss-cross hatched. Note that it is also possible that some CCEs indicate to use PC / TA for several users, e.g. by the following interpretation of the hatching in figure 9b: a user #1 may be assigned with CCEs 1, 9 and 5, all those including hatching from bottom left to upper right; a user #2 with CCEs 2, 10 and 5, all those including hatching from bottom right to upper left; Note that in this interpretation, criss-cross hatching includes both hatching from bottom right to upper left hatching from bottom left to upper right. Further UES may then be allocated to the remaining hatched fields, not shown or discussed here for simplicity of the presentation.

Furthermore, there may be users, that are normally not scheduled for every transmission individually but which get a so called persistent allocation (e. g. a user doing speech may get an allocation every 20ms, the typical generation rate of VoIP packets). However, if this user needs a TA/PC command, an explicit redundant grant can be generated including TA/PC. Then it is desirable to include TA / PC in any case for this user, irrespective of the CCE used. I.e. the convention can be used, that any such redundant scheduling includes TA/PC irrespective of the CCE(s) used.

Furthermore, e.g. the frame number may also be included in the parameters that determine whether TA/PC is included. E.g. for slow users, provisions to include TA/PC there may only occur seldom while for faster users this may occur more often. One simple way to define whether CCE Number N_CCE in frame number N_frame contains an update command for User with the user ID N_user is to calculated the quantity

$$\text{Command\_index} = (\text{N\_CCE} * \text{D\_CCE} + \text{N\_frame} * \text{D\_frame} + \text{N\_user} * \text{D\_user}) \bmod \text{D\_CCE}$$

and use the convention that a command is used if Command_index has a specific value e.g. Command_index < D_ CCE_max. Here D_CCE, D_frame, D_user and D_CCE_max are parameters that can be set either globally or in a user specific way or can in the simplest way be set to 1, D_CCE is also a parameter that can be set globally or user specifically, but shouldn't be set to 1 of course. Further modifications of this simple formula are possible as well.

For the latter case, it may be taken into account that users may employ DRX (Discontinuous Reception) in order to save battery power, i.e. an individual UE may be configured to only listen to a subset of the scheduling grants. Then the selection of the CCEs of frame numbers where TA / PC is to be included must take this DRX cycle into account. E.g. if the UE only listens to every $8^{th}$ possible frame, then it is pointless to include TA/PC in every other frame because then TA / PC would be included either in all or none of the frames the UE listens to. Either a subset of these frames when the UE actually listens is included or the DRX cycle and the TA / PA is selected to be relative prime (e.g. listen to every $8^{th}$ possible frame, TA/PC in every $5^{th}$ frame).

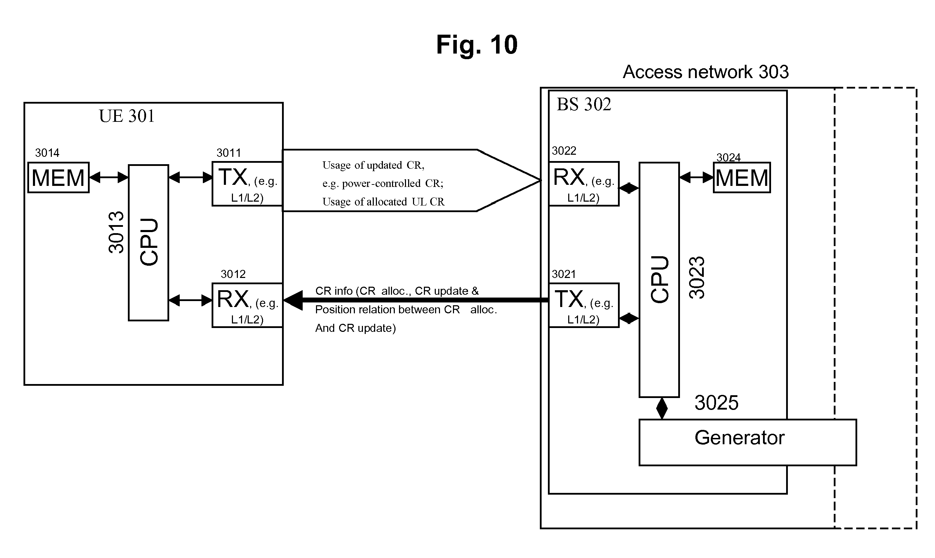

Fig. 10 shows one apparatus (e.g. a Base Station) for allocating communication resources according to the alternative third embodiment of the present invention and another apparatus (e.g. a User Equipment) for decoding and interpreting the allocations and control signalling commands of the one apparatus, the another apparatus being configured to apply the allocations and control signalling commands e.g. in the signal transmission.

It is to be noted that, apart from generator (or means for generating) 3025 of the BS 302, all other elements correspond or are similar to the elements having the same reference numbers in Figs. 4 or 8.

That is, the means for generating 3025 (or the corresponding method step) may (be configured to) generate position-related indication information indicating a positional relation between communication resource update information (e.g. TA/PC update) and communication resource information (e.g. a CCE).

Furthermore, the BS 302 may comprise means for including (or the corresponding method step), e.g. the CPU 3023 in conjunction with memory 3024, may (be configured) to include the generated position-related indication information into communication resource allocation information (e.g. UL/DL scheduling grant).

Finally, the means for transmitting 3021 (or the corresponding method step) may (be configured to) transmit the communication resource information, the communication resource allocation information being a portion of the communication resource information.

Then, e.g. the means for receiving 3012 (or the corresponding method step) of the UE 301 may (be configured to) receive the transmitted communication resource information (e.g. CCE) comprising both communication resource allocation information (e.g. UL/DL grants) and position-related indication information indicating a positional relation between communication resource update information and communication resource information.

For example, the CPU 3013 e.g. in conjunction with memory 3013 of the UE 301 may (be configured to) retrieve the communication resource allocation information from the communication resource information based on the position-related indication information.

Afterwards the (means for) transceiving and (means for) updating may (be configured to) perform the same or similar operations as set out in conjunction with the above-described first and second embodiments.

In addition, the communication resource information, the communication resource allocation information and/or the communication resource information may comprise one or more of the above-described further refinements.

[Further embodiments]

For the purpose of the present invention as described herein above, it should be noted that

- an access technology may be any technology by means of which a UE can access a communication network via a BS. Any present or future technologies, such as WiMAX, WLAN, BlueTooth©, Infrared, and the like may be used;
- generally, the present invention is applicable in those BS/UE environments relying e.g. on the Internet Protocol IP. The present invention is, however, not limited thereto, and any other present or future MIP version, or, more generally, a protocol following similar principles as MIPv4/6, is also applicable;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at a terminal or network element or module thereof are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. user equipment and base station) can be implemented as individual devices, units or means, but this does not exclude that they are implemented in a distributed fashion throughout the system, as long as the functionality of the device, unit or means is preserved.

NON-SCHEDULED UEs

As described above, the invention provides a signalling method for UEs with scheduled UL transmission. Special considerations are needed for UEs without any scheduled UL transmissions. The presented signalling method can be used for TA/PC update signalling specific for UEs with scheduled UL transmission (with a separate TA/PC update signalling for UEs without any scheduled UL transmissions or by forcing scheduled transmissions for UEs requiring TA/PC updating). Alternatively, it is possible to compose an essential part of TA/PC update signalling scheme serving UEs both with and without scheduled UL transmission. Such a solution resides in implicit association of the code sequence index used in the non-scheduled uplink channel to the code sequence index of the TA/PC control channel in the downlink. This applies especially to the code multiplexed downlink TA/PC control channel. This method, however, is equally well applicable to a multiplexing scheme, where frequency-and/or time-multiplexing are/is applied in addition to the mentioned code multiplexing technique.

A simple example of this is that there exist semi-statically reserved resources in the downlink frequency domain so that a set of orthogonal spreading factor sequences are available per frequency index. Thus, any PC/TA command that is needed may use its own (UE specific) code index and may be multiplexed with any other UE simultaneously to the same sub-carrier resources, up to the maximum number of UEs equal to the spreading factor. If the PC/TA control resource is not sufficient on these sub-carriers, an additional other set of frequency shifted sub-carriers can be reserved to double the signalling capacity. Again, the same set of code sequence indexes with the same spreading factor are available, as they are uniquely separated from the first set by the frequency indexes of the sub-carrier set. The frequency indexes of the orthogonal sets can further be associated to the scheduled uplink grants based on their CCE index number.

## Claims

1. A method, comprising:

   associating communication resource update information with communication resource allocation information, the communication resource allocation information and the associated communication resource update information each being a portion of communication resource information;
   signalling the association of the communication resource update information with the communication resource allocation information; and
   transmitting the communication resource information.

2. A method, comprising:

   receiving transmitted communication resource information comprising communication resource allocation information, associated communication resource update information, and a signaled association of the communication resource update information with the communication resource allocation information;
   retrieving the communication resource allocation information and the associated communication resource update information from the communication resource information based on the signaled association;
   transceiving signals based on the communication resource allocation information using an allocated communication resource; and
   updating the communication resource based on the communication resource update information.

3. The method according to claims 1 or 2, wherein the communication resource information is received in at least one control channel element.

4. The method according to any one of claims 1 to 3, wherein the communication resource allocation information comprises at least one of a user equipment allocation, a user equipment identification and a cyclic redundancy code.

5. The method according to any one of claims 1 to 4, wherein the communication resource update information comprises at least one parameter of the communication resource to be updated and at least one of the following:

   i) at least one information element indicating whether or not the communication resource is to be updated;
   ii) a respective information field for each one of the at least one parameter;
   iii) a common information field for each one of the at least one parameter and one information element, wherein each parameter allocates a different information length in the common information field and the one information element indicates the information length of the common information field to be read out; and
iv) a common information field consisting of a number of bits, wherein combinations of the at least one parameter are coded by pattern of the number of bits.

**6.** The method according to any one of claims 1 to 5, wherein the communication resource update information comprises at least one of a timing alignment update, a power control update, a frequency update, a phase update, an update of phase differences, an update of directivity of radiation and an update of measurement, radio access or networking information.

**7.** The method according to any one of claims 1 to 6, wherein the communication resource information is received in at least one physical downlink control channel.

**8.** The method according to claim 7, wherein the communication resource allocation information is an uplink scheduling grant.

**9.** The method according to claim 8, wherein, in the transceiving, the communication resource allocation information is received in at least one communication resource from a set of control channel candidates comprising the uplink scheduling grant.

**10.** The method according to any one of claims 1 to 6, wherein the communication resource information is an uplink scheduling grant for at least one resource of the uplink shared data channel.

**11.** The method according to claim 10, wherein the communication resource allocation information is a downlink scheduling grant for at least one resource of the downlink shared data channel.

**12.** The method according to claim 11, wherein, in the transceiving, at least a signal is transmitted using a communication resource from at least one set of uplink shared data channel resources comprised in the uplink scheduling grant.

**13.** The method according to claims 9 or 12, wherein, in the transceiving, the communication resource to receive is at least one of the selected set of downlink shared data channel resources comprised in the downlink scheduling grant.

**14.** The method according to any one of claims 1 to 13, wherein the associating and the signalling are performed on a first communication layer of a layered communication model, and the transmitting and the receiving are performed on a second communication layer of the layered communication model different from the first communication layer.

**15.** The method according to any one of claims 1 to 14, wherein at least a portion of the communication resource update information comprises sequence number information.

**16.** The method according to any one of claims 1 to 14, wherein, in the associating, an index indicating the association to the communication resource update information is attached, in the signalling, the index and the communication resource update information are signaled, and in the retrieving, the associated communication resource update information is retrieved based on the index.

**17.** The method according to claim 16, wherein at least a portion of the index comprises sequence number information.

**18.** A method, comprising:

integrating communication resource update information into communication resource allocation information, the communication resource allocation information and the integrated communication resource update information each being a portion of communication resource information; and
transmitting the communication resource information.

**19.** A method, comprising:

receiving transmitted communication resource information comprising communication resource allocation information comprising integrated communication resource update information;
transceiving signals based on the communication resource allocation information using an allocated communication resource; and
updating the communication resource based on the integrated communication resource update information.

**20.** The method according to claim 19, further comprising
detecting the integrated communication resource update information based on an invalid format of the communication resource information.

**21.** A method, comprising:

generating position-related indication information indicating a positional relation between communication resource update information and communication resource information;
including the generated position-related indication information into communication resource allocation information; and
transmitting the communication resource information, the communication resource allocation information being a portion of the communication resource information.

**22.** A method, comprising:

receiving transmitted communication resource information comprising both communication resource allocation information and position-related indication information indicating a positional relation between communication resource update information and communication resource information;
retrieving the communication resource allocation information from the communication resource information based on the position-related indication information;
transceiving signals based on the communication resource allocation information using an allocated communication resource; and
updating the communication resource based on the communication resource update information.

**23.** The method according to claims 21 or 22, wherein the communication resource information is received in at least one control channel element and the position-related indication information further comprises user-related information.

**24.** The method according to any one of claims 21 to 23, wherein the communication resource allocation information comprises at least one of a user equipment allocation, a user equipment identification and a cyclic redundancy code.

**25.** The method according to any one of claims 21 to 24, wherein the communication resource update information comprises at least one of a timing alignment update, a power control update, a frequency update, a phase update, an update of phase differences, an update of directivity of radiation and an update of measurement, radio access or networking information.

**26.** The method according to any one of claims 21 to 25, wherein the communication resource information is received in at least one physical downlink control channel.

**27.** The method according to claim 26, wherein the communication resource allocation information is an uplink scheduling grant.

**28.** The method according to claim 27, wherein, in the transceiving, the communication resource allocation information is received in at least one communication resource from a set of control channel candidates comprising the uplink scheduling grant.

**29.** The method according to any one of claims 21 to 25, wherein the communication resource information is an uplink scheduling grant for at least one resource of the uplink shared data channel.

**30.** The method according to any one of claims 21 to 26, wherein the communication resource allocation information is a downlink scheduling grant for at least one resource of the downlink shared data channel.

**31.** The method according to claim 30, wherein, in the transceiving, at least a signal is transmitted using a communication resource from at least one set of uplink shared data channel resources comprised in the uplink scheduling grant.

**32.** The method according to claims 28 or 31, wherein, in the transceiving, the communication resource to receive is at least one of the selected set of downlink shared data channel resources comprised in the downlink scheduling grant.

**33.** An apparatus, comprising:

means for associating communication resource update information with communication resource allocation information, the communication resource allocation information and the associated communication resource update information each being a portion of communication resource information;
means for signalling the association of the communication resource update information with the communication resource allocation information; and
means for transmitting the communication resource information.

**34.** An apparatus, comprising:

means for receiving transmitted communication resource information comprising communication resource allocation information and associated communication resource update information, and for receiving a signaled association of the communication resource update information with the communication resource allocation information;
means for retrieving the communication resource allocation information and the associated communication resource update information from the communication resource information based on the signaled association;
means for transceiving signals based on the communication resource allocation information using an allocated communication resource; and
means for updating the communication resource based on the communication resource update information.

**35.** The apparatus according to claims 33 or 34, wherein the communication resource information is received in at least one control channel element.

**36.** The apparatus according to any one of claims 33 to 35, wherein the communication resource allocation information comprises at least one of a user equipment allocation, a user equipment identification and a cyclic redundancy code.

**37.** The apparatus according to any one of claims 33 to 36, wherein the communication resource update information comprises at least one parameter of the communication resource to be updated and at least one of the following:

i) at least one information element indicating whether or not the communication resource is to be updated;
ii) a respective information field for each one of the at least one parameter;
iii) a common information field for each one of the at least one parameter and one information element, wherein each parameter allocates a different information length in the common information field and the one information element indicates the information length of the common information field to be read out; and
iv) a common information field consisting of a number of bits, wherein combinations of the at least one parameter are coded by pattern of the number of bits.

**38.** The apparatus according to any one of claims 33 to 37, wherein the communication resource update information comprises at least one of a timing alignment update, a power control update, a frequency update, a phase update, an update of phase differences, an update of directivity of radiation and an update of measurement, radio access or networking information.

**39.** The apparatus according to any one of claims 33 to 38, wherein the communication resource information is received in at least one physical downlink control channel.

**40.** The apparatus according to claim 39, wherein the communication resource allocation information is an uplink scheduling grant.

**41.** The apparatus according to claim 40, wherein the means for transceiving is configured to receive the communication resource allocation information using at least one of a communication resource from a set of control channel candidates comprising the uplink scheduling grant.

**42.** The apparatus according to any one of claims 33 to 41, wherein the communication resource information is an uplink scheduling grant for at least one resource of the uplink shared data channel.

**43.** The apparatus according to claim 42, wherein the communication resource allocation information is a downlink scheduling grant for at least one resource of the downlink shared data channel.

**44.** The apparatus according to claim 43, wherein the means for transceiving is configured to transmit at least a signal in a communication resource from at least one of a set of uplink shared data channel resources comprised in the uplink scheduling grant.

**45.** The apparatus according to claims 41 or 44, wherein the communication resource to receive is at least one of the selected set of downlink shared data channel resources comprised in the downlink scheduling grant.

**46.** The apparatus according to any one of claims 33 to 45, wherein the means for associating and the means for signalling are configured to operate on a first communication layer of a layered communication model, and the means for transmitting and the means for receiving are configured to operate on a second communication layer of the layered communication model different from the first communication layer.

**47.** The apparatus according to any one of claims 33 to 46, wherein at least a portion of the communication resource update information comprises sequence number information.

**48.** The apparatus according to any one of claims 33 to 46, wherein the means for associating is configured to attach an index indicating the association to the communication resource update information, the means for signalling is configured to signal the index and the communication resource update information, and the means for retrieving is configured to retrieve the associated communication resource update information based on the index.

**49.** The apparatus according to claim 48, wherein at least a portion of the index comprises sequence number information.

**50.** An apparatus, comprising:

means for integrating communication resource update information into communication resource allocation information, the communication resource allocation information and the integrated communication resource update information each being a portion of communication resource information; and
means for transmitting the communication resource information.

**51.** An apparatus, comprising:

means for receiving transmitted communication resource information comprising communication resource allocation information comprising integrated communication resource update information;
means for transceiving signals based on the communication resource allocation information using an allocated communication resource; and
means for updating the communication resource based on the integrated communication resource update information.

**52.** The apparatus according to claim 51, further comprising
means for detecting the integrated communication resource update information based on an invalid format of the communication resource information.

**53.** An apparatus, comprising:

means for generating position-related indication information indicating a positional relation between communication resource update information and communication resource information;
means for including the generated position-related indication information into communication resource allocation information; and
means for transmitting the communication resource information, the communication resource allocation information being a portion of the communication resource information.

**54.** An apparatus, comprising:

means for receiving transmitted communication resource information comprising both communication resource allocation information and position-related indication information indicating a positional relation between communication resource update information and communication resource information;
means for retrieving the communication resource allocation information from the communication resource information based on the position-related indication information;
means for transceiving signals based on the communication resource allocation information using an allocated communication resource; and
means for updating the communication resource based on the communication resource update information.

**55.** The apparatus according to claims 53 or 54, wherein the communication resource information is received in at least one control channel element and the position-related indication information further comprises user-related information.

**56.** The apparatus according to any one of claims 53 to 55, wherein the communication resource allocation information comprises at least one of a user equipment allocation, a user equipment identification and a cyclic redundancy code.

**57.** The apparatus according to any one of claims 53 to 56, wherein the communication resource update information comprises at least one of a timing alignment update, a power control update, a frequency update, a phase update, an update of phase differences, an update of directivity of radiation and an update of measurement, radio access or networking information.

**58.** The apparatus according to any one of claims 53 to 57, wherein the communication resource information is received in at least one physical downlink control channel.

**59.** The apparatus according to claim 58, wherein the communication resource allocation information is an uplink scheduling grant.

**60.** The apparatus according to claim 59, wherein, in the transceiving, the communication resource allocation information is received in at least one communication resource from a set of control channel candidates comprising the uplink scheduling grant.

**61.** The apparatus according to any one of claims 53 to 57, wherein the communication resource information is an uplink scheduling grant for at least one resource of the uplink shared data channel.

**62.** The apparatus according to claim 61, wherein the communication resource allocation information is a downlink scheduling grant for at least one resource of the downlink shared data channel.

**63.** The apparatus according to claim 62, wherein the means for transceiving is configured to transmit at least a signal using a communication resource from at least one set of uplink shared data channel resources comprised in the uplink scheduling grant.

**64.** The apparatus according to claims 60 or 63, wherein the means for transceiving is configured to receive the communication resource being at least one of the selected set of downlink shared data channel resources comprised in the downlink scheduling grant.

**65.** The apparatus according to any one of claims 53 to 64, wherein the apparatus is implemented as a chipset or module.

**66.** A system, comprising:

an apparatus according to claim 33; and
at least one apparatus according to claim 34.

**67.** The system according to claim 66, wherein the association of the communication resource update information with the communication resource allocation information is a one-to-one association.

**68.** The system according to claim 66, wherein the association of the communication resource update information with the communication resource allocation information is unique for the communication resource allocation information.

**69.** A system, comprising:

an apparatus according to claim 50; and
at least one apparatus according to claim 51.

70. A system, comprising:

an apparatus according to claim 53; and
at least one apparatus according to claim 54.

71. A computer program product comprising code means for performing methods steps of a method according to any one of claims 1 to 32, when run on a computer.

Fig. 1

## Fig. 2A

| UE Allocation | UE ID, CRC |
|---|---|

| | | | | | | | | | | |
|---|---|---|---|---|---|---|---|---|---|---|
| **PDCCH 201** | | | | | | | | | | |
| UL Grant 1 2021 | UL Grant 2 2022 | UL Grant 3 2023 | UL Grant 4 2024 | ... | UL Grant M $202m_{UL}$ | TA/PC 2031 | Index 1 2041 | ... | TA/PC 203n | Index N 204n |

Association 205

## Fig. 2B

| UE Allocation | UE ID, CRC |
|---|---|

| | | | | | | | | | | |
|---|---|---|---|---|---|---|---|---|---|---|
| **PDCCH 201** | | | | | | | | | | |
| DL Grant 1 2021 | DL Grant 2 2022 | DL Grant 3 2023 | DL Grant 4 2024 | ... | DL Grant M $202m_{DL}$ | TA/PC 2031 | Index 1 2041 | ... | TA/PC 203n | Index N 204n |

Association 205

UL/DL Grant: example of CR alloc. info
TA/PC: The PC and/or TA command,
Example of CR update info.
PDCCH: example of CR resource info

EP 1 988 649 A1

# Fig. 3

<u>300</u>

UE 301                                                    BS 302          Access network 303

Uplink (UL)

Downlink (DL)

S1: Associating
CR update ← CR alloc.

S2: Signalling                S3: Transmitting
Association                   CR info
(CR update ← CR alloc.,)      (CR update, CR alloc.,)

S4: Retrieving
CR update, CR alloc. from CR
info using association

S5: Transceiving              Usage of allocated Uplink CR 304
using allocated CR

S6: Updating                  Usage of updated CR 304,
CR using CR update            e.g. power-controlled CR;
                              Usage of allocated UL CR

EP 1 988 649 A1

# Fig. 4

**UE 301**

**BS 302**

3014

MEM

3013

CPU

3011

TX,
(L1/L2)

TX,
(> L1/L2)

3012

RX,
(L1/L2)

RX,
(> L1/L2)

Usage of updated CR,
e.g. power-controlled CR;
Usage of allocated UL CR

CR update, CR alloc., (assoc.)

(assoc.)

3022

RX,
(L1/L2)

RX,
(> L1/L2)

3021

TX,
(L1/L2)

TX,
(> L1/L2)

CPU
3023

3024

MEM

3025

29

EP 1 988 649 A1

EP 1 988 649 A1

# Fig. 5

Used control channel / CCE
mapping

TA/PC update association to
control channel candidates

| TA/PC1 | TA/PC2 | TA/PC3 |
|--------|--------|--------|

Fig. 6

## Fig. 7

**300**

UE 301                                   BS 302          Access network 303

Uplink (UL)

Downlink (DL)

S1: Integrating
CR update into CR alloc.

S2: Transmitting
CR info (CR alloc. with
integrated CR update)

S21: Detecting
integrated CR update

S5: Transceiving
using allocated CR

Usage of allocated Uplink CR 304

S4: Updating
CR using CR update

Usage of updated CR 304,
e.g. power-controlled CR;
Usage of allocated UL CR

EP 1 988 649 A1

# Fig. 8

Access network 303

UE 301

BS 302

3014 MEM

3011 TX, (L1/L2)

TX, (> L1/L2)

3013 CPU

3012 RX, (L1/L2)

Usage of updated CR,
e.g. power-controlled CR;
Usage of allocated UL CR

CR info (CR alloc. with integrated CR update)

3022 RX, (L1/L2)

RX, (> L1/L2)

3024 MEM

3021 TX, (L1/L2)

3023 CPU

3025

EP 1 988 649 A1

# Fig. 9A

| CCE 1 | CCE 2 | CCE 3 | CCE 4 | CCE 5 | CCE 6 | CCE 7 | CCE 8 | CCE 9 | CCE10 | CCE11 |

...

# Fig. 9B

| CCE 1 | CCE 2 | CCE 3 | CCE 4 | CCE 5 | CCE 6 | CCE 7 | CCE 8 | CCE 9 | CCE10 | CCE11 |

...

EP 1 988 649 A1

34

Fig. 10

**European Patent Office**

# EUROPEAN SEARCH REPORT

Application Number

EP 07 11 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 417 167 A (IPWIRELESS INC [US]) 15 February 2006 (2006-02-15) * abstract * * page 11, line 13 - page 12, line 11 * * page 22, line 32 - page 23, line 13 * * page 24, line 4 - line 25 * * page 26, line 21 - page 27, line 14 * * page 29, line 10 - line 19 * * claims 1,3,8,9 * * figure 1 * | 1-71 | INV. H04B7/26 |
| A | "Universal Mobile Telecommunications System (UMTS); FDD enhanced uplink; Overall description; Stage 2 (3GPP TS 25.309 version 6.4.0 Release 6); ETSI TS 125 309" ETSI STANDARDS, EUROPEAN TELECOMMUNICATIONS STANDARDS INSTITUTE, SOPHIA-ANTIPO, FR, vol. 3-R2, no. V640, September 2005 (2005-09), XP014031929 ISSN: 0000-0001 * paragraph [0009] * | 1-71 | |
| A | WO 2006/077141 A (ERICSSON TELEFON AB L M [SE]; ENGLUND EVA [SE]; BARK GUNNAR [SE]; DE B) 27 July 2006 (2006-07-27) * abstract * * page 2, line 15 - page 4, line 10 * | 1-71 | TECHNICAL FIELDS SEARCHED (IPC) H04B |
| A | EP 0 977 370 A (LUCENT TECHNOLOGIES INC [US]) 2 February 2000 (2000-02-02) * abstract * * paragraph [0015] - paragraph [0016] * * paragraph [0019] - paragraph [0025] * * figures 1,5-8 * | 1-71 | |

The present search report has been drawn up for all claims

| Place of search | Date of completion of the search | Examiner |
|---|---|---|
| Berlin | 17 September 2008 | Bittermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 5661

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2008

| Patent document cited in search report | | Publication date | Patent family member(s) | | Publication date |
|---|---|---|---|---|---|
| GB 2417167 | A | 15-02-2006 | CN | 101006741 A | 25-07-2007 |
| | | | EP | 1779700 A1 | 02-05-2007 |
| | | | WO | 2006015984 A1 | 16-02-2006 |
| | | | JP | 2008509618 T | 27-03-2008 |
| | | | KR | 20070041574 A | 18-04-2007 |
| | | | US | 2008144600 A1 | 19-06-2008 |
| WO 2006077141 | A | 27-07-2006 | EP | 1839458 A1 | 03-10-2007 |
| | | | US | 2008214197 A1 | 04-09-2008 |
| EP 0977370 | A | 02-02-2000 | AU | 719179 B2 | 04-05-2000 |
| | | | AU | 4116799 A | 17-02-2000 |
| | | | BR | 9902885 A | 08-03-2000 |
| | | | CA | 2273529 A1 | 28-01-2000 |
| | | | CN | 1247419 A | 15-03-2000 |
| | | | DE | 69831799 D1 | 10-11-2005 |
| | | | DE | 69831799 T2 | 22-06-2006 |
| | | | ES | 2248879 T3 | 16-03-2006 |
| | | | JP | 3563302 B2 | 08-09-2004 |
| | | | JP | 2000091987 A | 31-03-2000 |
| | | | KR | 20000012000 A | 25-02-2000 |
| | | | US | 6647005 B1 | 11-11-2003 |

EPO FORM P0459

For more details about this annex : see Official Journal of the European Patent Office, No. 12/82